(19) Europäisches Patentamt
European Patent Office
Office européen des brevets

(11) **EP 3 328 188 B1**

(12) **EUROPÄISCHE PATENTSCHRIFT**

(45) Veröffentlichungstag und Bekanntmachung des Hinweises auf die Patenterteilung:
**19.05.2021   Patentblatt 2021/20**

(21) Anmeldenummer: **16738791.9**

(22) Anmeldetag: **14.07.2016**

(51) Int Cl.:
***A01J 5/017*** *(2006.01)*

(86) Internationale Anmeldenummer:
**PCT/EP2016/066751**

(87) Internationale Veröffentlichungsnummer:
**WO 2017/016887 (02.02.2017 Gazette 2017/05)**

(54) **VERFAHREN UND VORRICHTUNG ZUM AUTOMATISCHEN ANSETZEN VON MELKBECHERN AN ZITZEN EINES MILCHGEBENDEN TIERES**

METHOD AND DEVICE FOR AUTOMATICALLY PLACING TEAT CUPS ONTO TEATS OF A MILK-PRODUCING ANIMAL

PROCÉDÉ ET DISPOSITIF POUR INSTALLER AUTOMATIQUEMENT DES GOBELETS TRAYEURS SUR LES TRAYONS D'UN ANIMAL LAITIER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.07.2015   DE 102015112308**

(43) Veröffentlichungstag der Anmeldung:
**06.06.2018   Patentblatt 2018/23**

(73) Patentinhaber: **GEA Farm Technologies GmbH**
**59199 Bönen (DE)**

(72) Erfinder:
• **JAGODZINSKI, Jarek**
**45886 Gelsenkirchen (DE)**

• **WIETHOFF, Magnus**
**59514 Welver - Dinker (DE)**
• **RENNER, Clemens**
**44225 Dortmund (DE)**

(74) Vertreter: **Kleine, Hubertus**
**Loesenbeck - Specht - Dantz**
**Patent- und Rechtsanwälte**
**Am Zwinger 2**
**33602 Bielefeld (DE)**

(56) Entgegenhaltungen:
**WO-A1-2009/093965     WO-A1-2012/134379**

EP 3 328 188 B1

**Beschreibung**

Die Erfindung betrifft ein Verfahren zum automatischen Ansetzen von Melkbechern an Zitzen eines milchgebenden Tieres, insbesondere einer Kuh, bei dem eine zweidimensionale (2D) Abbildung der Zitzen des Tieres erstellt wird, wobei Abstandsinformationen für zumindest eine Mehrzahl von Bildpunkten der 2D-Abbildung ermittelt werden und wobei die Position von zumindest einer der Zitzen anhand einer Auswertung der 2D-Abbildung unter Berücksichtigung der Abstandsinformationen in einem vorgegebenen Koordinatensystem bestimmt wird. Die Erfindung betrifft weiterhin eine Vorrichtung zum automatischen Ansetzen von Melkbechern an Zitzen eines milchgebenden Tieres, insbesondere einer Kuh.

In automatisierten Melksystemen für milchgebende Tiere, beispielsweise für Kühe, kommt der Bestimmung der Position der Zitzen bzw. der Zitzenenden der Tiere eine maßgebliche Bedeutung zu. Nur wenn die Position mit ausreichender Orts- und Zeitauflösung erfasst werden kann, kann ein Ansetzvorgang automatisiert schnell und sicher und damit auch ohne Stress für das Tier durchgeführt werden. Für den Ansetzvorgang werden dreidimensionale (3D) Informationen über die Position der Zitze im Raum in einem vorgegebenen Koordinatensystem benötigt. Es haben sich in der Praxis verschiedene Systeme etabliert, um die Position der Zitzen im Raum zu bestimmen. Zu nennen sind hier insbesondere bildgebende Verfahren, bei denen ein zunächst zweidimensionales Abbild mit einer Vielzahl von Bildpunkten (Pixeln) erstellt wird, das für alle oder zumindest einen Teil der Bildpunkte um Abstandsinformationen ergänzt wird. Die Abstandsinformationen betreffen beispielsweise den Abstand zwischen einer bildaufnehmenden Kamera und dem von einem Bildpunkt jeweils wiedergegebenen Objekt.

Zur Gewinnung der Abstandsinformationen sind beispielsweise stereoskopische Verfahren gebräuchlich, bei denen die Abstandsinformation aus einem Vergleich zweier aus unterschiedlichen Richtungen aufgenommenen Abbildungen gewonnen werden. Als eine weitere Methode ist aus der Druckschrift WO 2007/104 124 A1 die Verwendung eines bildgebenden Time-Of-Flight (TOF)-Verfahrens bekannt, bei dem mithilfe nur einer Kamera sowohl eine zweidimensionale Abbildung der Zitzen erfolgt, als auch Abstandsinformationen für jedes der Pixel gewonnen werden können.

Mithilfe der Information über die Position der Zitzen im Raum kann eine Vorrichtung zum Ansetzen der Melkbecher an die Zitzen angesteuert werden. In der Praxis haben sich hier Roboterarme durchgesetzt, die entweder einzelne Melkbecher greifen und unter Verwendung der Positionsinformationen an die Zitzen ansetzen oder die ein vollständiges Melkzeug mit mehreren Melkbechern bewegen, wobei die Melkbecher selektiv angehoben werden können, um sie nacheinander ansetzen zu können. In Melkständen, in denen ein automatisiertes Melken durchgeführt wird, wird versucht, das Tier vor dem Melken in eine möglichst reproduzierbare Position zu bringen. Dennoch besteht eine Schwierigkeit beim automatisierten Melken darin, dass sich die Position der Zitzen, ebenso wie die Ausrichtung des Euters selbst bei ein und demselben Tier von Melkvorgang zu Melkvorgang stark unterscheidet. Die Unterschiede haben ihre Ursache z.B. in unterschiedlicher Körperhaltung des Tieres. Zudem unterliegen die Größe des Euters und damit die Positionen der Zitzen auch tageszeitlichen und jahreszeitlichen Schwankungen.

Darüber hinaus wird der Ansetzvorgang dadurch erschwert, dass je nach Körperhaltung und Stellung des Tieres unter Umständen nicht alle Zitzen zu jedem Zeitpunkt sichtbar sind. Dadurch verzögert sich der Ansetzvorgang, bis durch erneute Bewegung des Tieres jede der Zitzen für einen ausreichenden Zeitraum im Blickfeld der bildgebenden Kamera ist. Eine Verzögerung oder gar ein Abbruch des Melkvorgangs, gefolgt von einem erneuten Ansetzversuch bedeuten jedoch eine zusätzliche Belastung und Irritation des milchgebenden Tieres.

Die Druckschrift WO 2012/134379 A1 beschreibt ein Verfahren zum automatisierten Melken, bei in einem Fall, in dem nicht alle Zitzenpositionen automatisch bestimmt werden können, Bilder einem Bediener zugänglich gemacht werden, woraufhin der Bediener die Zitzenpositionen manuell anhand der Bilder angibt. Die so bestimmten Zitzenpositionen werden dem nachfolgenden automatisierten Melkprozess zu Grunde gelegt. bei einem vollständig autonom ablaufenden Melkverfahren ist eine derartige Benutzerintervention nicht gewünscht.

Die Druckschrift WO 2009/093965 A1 betrifft ebenfalls ein Verfahren zum automatisierten Ansetzen von Melkbechern an Zitzen eines milchgebenden Tieres. Dabei ist eine Steuereinrichtung eines Roboterarms dazu eingerichtet, einen Zitzenbecher an eine verdeckte Zitze des milchgebenden Tieres anzusetzen, basierend auf Informationen der Position der Zitzen relativ zu anderen Zitzen und basierend auf einer Position einer wiederholt erkannten Zitze, die nicht verdeckt ist. Durch das Verfahren wird vorteilhaft in vielen Fällen ein Ansetzen auch dann automatisch ermöglicht, wenn ein Zitzenbecher im ausgewerteten Bild einer zur Positionsidentifizierung genutzten Kamera verdeckt ist. Für eine erfolgreiche Durchführung ist das Verfahren auf korrekte und möglichst aktuelle Informationen über die Positionen der Zitzen relativ zueinander angewiesen. Die Druckschrift liefert allerdings keine Details darüber, wie die genannten Informationen der Positionen der Zitzen des Tieres relativ zueinander erhalten bzw. aktualisiert werden.

Es ist daher eine Aufgabe der vorliegenden Erfindung, für ein Verfahren zum automatisierten Ansetzen von Melkbechern an Zitzen eines milchgebenden Tieres zu schaffen, bei dem ein Ansetzvorgang auch dann erfolgreich und schnellstmöglich durchgeführt werden kann, wenn nicht zu jedem Zeitpunkt alle Zitzen des milchgebenden Tieres von der bildgebenden Kamera erfasst werden können, möglichst aktuelle Informationen über die Positionen der Zitzen relativ zueinander bereitzustellen. Es ist eine weitere Aufgabe, eine Vorrichtung zur Durchführung dieses Verfahrens anzugeben.

Diese Aufgabe wird durch ein Verfahren bzw. eine Vorrichtung mit den jeweiligen Merkmalen der unabhängigen Ansprüche 1 bzw. 10 gelöst. Vorteilhafte Ausgestaltungen und Weiterbildungen sind in den abhängigen Ansprüchen angegeben. Ein Verfahren der eingangs genannten Art weist die folgenden Schritte auf: Es wird eine erste Position von zumindest einer der Zitzen in dem vorgegebenen Koordinatensystem anhand einer 2D-Abbildung der Zitzen und zugeordneter Abstandsinformationen ermittelt. Eine weitere Position einer weiteren der Zitzen wird anhand der mindestens einen ermittelten Position unter Verwendung von relativen Positionsinformationen der Zitzen untereinander bestimmt, woraufhin ein Ansetzen des Melkbechers an der weiteren Position erfolgt.

Durch die Verwendung von gespeicherten relativen Positionsinformationen, die die Position einzelner Zitzen des Tieres relativ zueinander umfasst, kann die Position einer Zitze, die nicht unmittelbar aus dem 2D-Abbild und den Abstandsinformationen bestimmt werden kann, aus der unmittelbar bestimmbaren Positionen von zumindest einer sichtbaren Zitzen berechnet werden. Auf diese Weise ist ein Ansetzen eines Melkbechers auch dann möglich, wenn die betreffende weitere Zitze, an die angesetzt werden soll, nicht oder nur teilweise im Blickfeld der Kamera ist. Unter der Voraussetzung, dass aus der betreffenden 2D-Abbildung einschließlich der Abstandsinformationen die Relativposition von zumindest zwei der Zitzen zueinander bestimmbar ist, werden erfindungsgemäß die abgespeicherten relativen Positionsinformationen anhand zumindest einer 2D-Abbildung mit Abstandsinformationen aktualisiert. Dazu wird aus der betreffenden 2D-Abbildung einschließlich der Abstandsinformationen die Relativposition von zumindest zwei der Zitzen zueinander anhand zweier ermittelter Positionen der Zitzen bestimmt und zur Aktualisierung der abgespeicherten relativen Positionsinformationen verwendet.

Das Verfahren kann auch verwendet werden, wenn die Zitze, an die angesetzt werden soll, nur teilweise verdeckt ist. Üblicherweise werden aus dem 2D-Abbild der Kamera eine größere Anzahl möglicher Zitzenpositionen ermittelt, als tatsächlich Zitzen bei dem Tier vorhanden sind. In einem solchen Fall werden üblicherweise die der Anzahl der Zitzen des Tiers entsprechende Anzahl möglicher Positionen ausgewählt, die das höchste Signifikanzniveau bei der Positionsbestimmung haben. Dabei können ergänzend Zusatzinformationen über verdeckte Zitzen mitberücksichtigt werden.

Zu einer teilweise verdeckten Zitze kann unter Umständen eine mögliche Position aus dem 2D-Abbild und den Abstandsinformationen ermittelt werden, die jedoch kein großes Signifikanzniveau zeigt und typischerweise nicht als Zitzenposition ausgewählt werden würden. Wenn sich bei der Positionsbestimmung erfindungsgemäßen Positionsbestimmung durch Einbeziehung von relativen Positionsinformationen eine der möglichen Positionen nah an der berechneten Position liegt, kann entsprechend wahlweise die berechnete Position, die nahe liegende mögliche Position oder ein Mittelwert beider als Position für den weiteren Ansetzvorgang verwendet werden.

Die gespeicherten relativen Positionsinformationen können bevorzugt anhand von zuvor erstellten 2D-Abbildungen und Abstandsinformationen der betreffenden Zitzen ermittelt werden, insbesondere aus solchen 2D-Abbildungen, bei denen alle Zitzen sichtbar und ihre Position eindeutig oder mit einer hohen Wahrscheinlichkeit korrekt bestimmt werden kann.

Gespeicherte relative Positionsinformationen und neue Positionsinformationen werden erfindungsgemäß miteinander verrechnet. Dieses resultiert dann in modifizierten gespeicherten Positionsinformationen, die sich gemäß einer vorgegebenen Rechenvorschrift sowohl aus dem zuvor gespeicherten relativen Positionsinformationen als auch den aktuellen relativen Positionsinformationen zusammensetzen. Dabei kann ein Gewichtungsfaktor angegeben sein, der den Einfluss aktueller relativer Positionsinformationen auf die gespeicherten relativen Positionsinformationen beschreibt. Eine mögliche Rechenvorschrift ist beispielsweise eine Mittelwertbildung unter Berücksichtigung eines eventuell angegebenen Gewichtungsfaktors.

In einer vorteilhaften Ausgestaltung des Verfahrens wird die 2D-Abbildung mithilfe eines TOF-Sensors erstellt, der eine Mehrzahl von Bildpunkten (Pixeln) aufweist, wobei für jeden der Bildpunkte Abstandsinformationen in einem Phasendetektionsverfahren ermittelt werden. Der Sensor ist bevorzugt als ein zweidimensionales Feld (Array) von Bildpunkten ausgebildet, z.B. als ein CMOS (Complementary Metal-Oxide Semiconductor) - Sensor.

Bei einem TOF-Sensor wird eine modulierte Lichtquelle zur Beleuchtung der Objekte im Blickfeld des TOF-Sensors eingesetzt. Der TOF-Sensor liefert zum einen eine 2D-Abbildung seines Blickfelds und fungiert in diesem Sinne wie eine Kamera. Zusätzlich werden für jeden einzelnen Bildpunkt des Sensors Phaseninformationen des erfassten Lichts im Hinblick auf die Modulation der Lichtquelle ausgewertet. Phasenunterschiede bei den einzelnen Pixeln rühren von unterschiedlichen Laufzeiten des Lichts her, das von den Objekten im Blickfeld des Sensors auf diesen zurückgeworfen wird. Aus den Phaseninformationen kann ein Abstand der von den einzelnen Bildpunkten abgebildeten Objekte bzw. Objektabschnitte zum Sensor bestimmt werden. Es wird somit eine 2D-Abbildung mit Tiefeninformation, also eine 3D-Abbildung erhalten. Vorteilhaft ist eine dabei eine hohe Zeitauflösung der 3D-Abbildung erreichbar.

In einer weiteren vorteilhaften Ausgestaltung des Verfahrens wird von der 2D-Abbildung der Zitzen des Tieres auch mindestens ein anzusetzender Melkbecher erfasst und eine Position des Melkbechers extrahiert. Ein Ansetzen des Melkbechers an eine der Zitzen erfolgt unter Berücksichtigung einer ermittelten Position der Zitze im vorgegebenen Koordinatensystem, sowie der ermittelten Position des Melkbechers in dem gleichen Koordinatensystem. Das Koordinatensystem kann dabei beispielsweise durch die Position der Kamera festgelegt sein. Alternativ kann das vorgegebene Koordinatensystem anhand der Position einer der Zitzen oder des Melkbechers so umgerechnet werden, dass sein Nullpunkt durch die Position einer dieser Zitzen und/oder des Melkbechers beschrieben ist.

Dabei können Abweichungen der ermittelten Positionen der Melkbecher mit hinterlegten (oder zu einem früheren Zeitpunkt ermittelten) Positionen verglichen werden. Eine Abweichung kann auf eine Beschädigung des Melkzeugs hinweise, beispielsweise durch einen Tritt des michgebenden Tieres.

In einer weiteren vorteilhaften Ausgestaltung des Verfahrens werden die relativen Positionsinformationen für jede der Zitzen in Form eines Vektors gespeichert, wobei die Vektoren die relative Position der Zitze zu einem vorgegebenen Bezugspunkt angeben. Bevorzugt kann der vorgegebene Bezugspunkt dabei gleich der Position einer der Zitzen gewählt werden. In dem Fall ist zur Angabe der Relativpositionen eine Anzahl von N Zitzen lediglich eine Anzahl von (N-1) Vektoren notwendig. Eine Aktualisierung abgespeicherter relativer Positionsinformationen mit aktuellen relativen Positionsinformationen kann bei dieser Art der Speicherung der relativen Positionsinformationen durch einfache mathematische Vektor- oder Matrixoperationen erfolgen.

Eine erfindungsgemäße Vorrichtung zum automatischen Ansetzen von Melkbechern an Zitzen eines milchgebenden Tieres, insbesondere einer Kuh, weist eine Ansetzvorrichtung und eine Sensor zur Erfassung einer zweidimensionalen Abbildung der Zitzen des Tieres und von Abstandsinformationen für zumindest eine Mehrzahl von Bildpunkten der zweidimensionalen Abbildung auf. Sie zeichnet sich dadurch aus, dass sie eine zur Durchführung eines Verfahrens gemäß einem der zuvor genannten Ansprüche eingerichtete Ablaufsteuerung aufweist, die Informationen von dem Sensor auswertet und die Ansetzvorrichtung ansteuert.

Die Erfindung wird nachfolgend anhand eines Ausführungsbeispiels mithilfe von Figuren näher erläutert. Die Figuren zeigen:

Fig. 1    eine schematische perspektivische Darstellung einer Vorrichtung zum automatisierten Melken und

Fig. 2    ein Flussdiagramm eines Ausführungsbeispiels eines Verfahrens zum Ansetzen von Melkbechern an Zitzen eines milchgebenden Tieres.

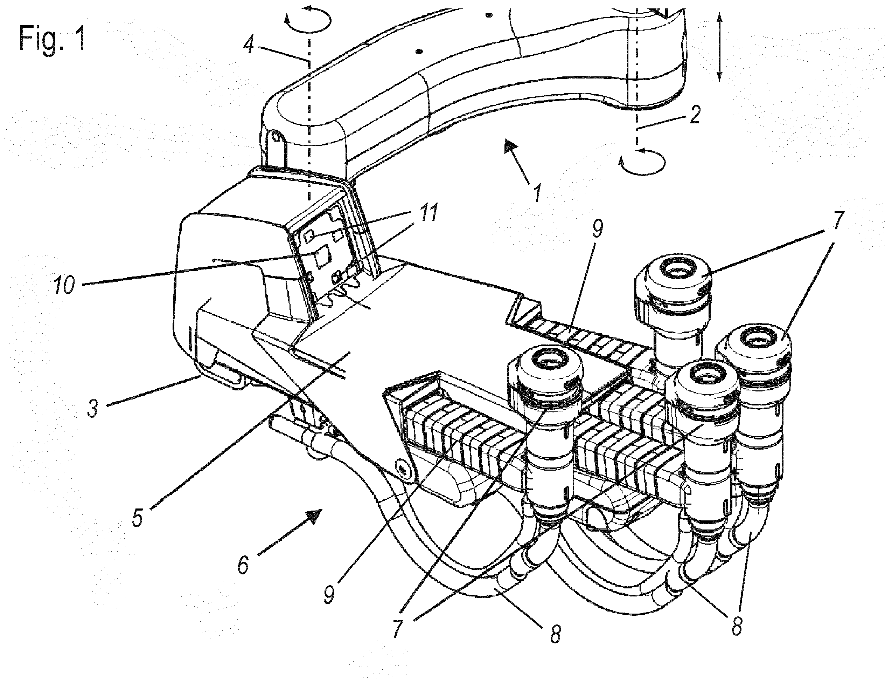

In Fig. 1 ist ein Teil einer Vorrichtung zum automatisierten Melken in einer perspektivischen Darstellung gezeigt. Die Vorrichtung umfasst einen Roboterarm 1, der über eine hier nicht dargestellte Armantriebseinheit in vertikaler Richtung verfahren und um eine erste Schwenkachse 2 verschwenkt werden kann. An einem freien Ende des Roboterarms 1 ist ein Halter 3 angebracht, der über eine hier ebenfalls nicht dargestellte Antriebseinheit um eine zweite Schwenkachse 4 verschwenkt werden kann. Am Halter 3 ist ein Melkzeugträger 5 montiert, der Melkzeug 6 trägt.

Im dargestellten Ausführungsbeispiel umfasst das Melkzeug 6 vier Melkbecher 7, die über Milch- und Vakuumschläuche 8 mit einer hier ebenfalls nicht dargestellten Melkeinrichtung verbunden sind. Die im dargestellten Ausführungsbeispiel gezeigten vier Melkbecher 7 dienen dem Melken von beispielsweise Kühen. Für andere Tiere, beispielsweise Ziegen oder Schafe, kann eine andere Anzahl von beispielsweise zwei Melkbechern beim Melkzeug vorgesehen sein.

Die Melkbecher 7 sind im dargestellten Ausführungsbeispiel über ein Segmentelement 9 an dem Melkzeugträger 5 montiert. Das Segmentelement 9 umfasst eine Mehrzahl von ringförmigen, hohlen Segmenten, durch die im Inneren des Segmentelements 9 ein Zugmittel, beispielsweise ein Seil oder eine Kette, verläuft, das über einen Aktor gespannt werden kann. In der Abbildung der Figur 1 sind die Zugelemente aller Segmentelemente 9 gespannt, wodurch alle vier Melkbecher 7 sich in der dargestellten angehobenen Position befinden. Die Zugmittel der Segmentelemente 9 können selektiv über ihre Aktoren betätigt werden, sodass jeder einzelne der Melkbecher 7 in eine angehobene oder abgesenkte Position gebracht werden kann.

Weiterhin ist an dem Melkzeugträger 5 ein bildgebender Sensor 10 angeordnet, der im vorliegenden Fall als ein TOF-Sensor ausgebildet ist und entsprechend in der Lage ist, eine zweidimensionale (2D-) Abbildung mit einer vorgegebenen Anzahl von Bildpunkten (Pixeln) zu erstellen, wobei für die Bildpunkte jeweils zusätzlich Abstandsinformationen für den Abstand zwischen dem Bildsensor 10 und dem von den jeweiligen Pixel abgebildeten Objekt bereitgestellt werden. In diesem Sinne kann der bildgebende Sensor 10 auch als ein 3D-Sensor angesehen werden, da er Lateral- und Tiefeninformationen bereitstellt. Nachfolgend wird der Sensor 10 aus diesem Grund auch als 3D-Sensor 10 bezeichnet.

Um den 3D-Sensor 10 herum sind Lichtquellen 11 angeordnet, die einer Beleuchtung des von den 3D-Sensor 10 erfassten Blickfelds dienen. Die Anordnung und Ausrichtung des 3D-Sensors 10 ist so gewählt, dass bei geeigneter Ausrichtung des Melkzeugträgers 5 prinzipiell alle Zitzen des zu melkenden Tieres im Blickfeld des 3D-Sensors 10 liegen können. Von möglichen Verdeckungen der Zitzen abgesehen, stellt der 3D-Sensor 10 somit Informationen zur Verfügung, aus der die Lage und Ausrichtung aller Zitzen des milchgebenden Tieres gleichzeitig ermittelt werden kann. Der Bildausschnitt ist bevorzugt zudem so gewählt, dass auch Melkbecher 7 in der angehobenen Position vom 3D-Sensor 10 erfasst werden können.

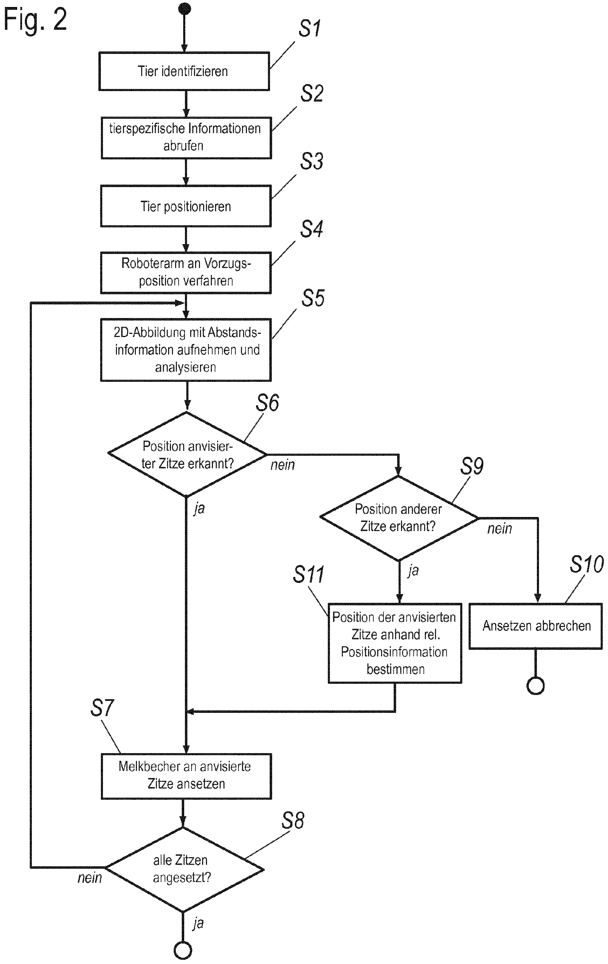

Nachfolgend wird im Zusammenhang mit einem in Fig. 2 wiedergegebenen Flussdiagramm ein erfindungsgemäßes Verfahren zum automatischen Ansetzen von Melkbechern an Zitzen eines milchgebenden Tieres erläutert. Das Verfahren kann beispielsweise unter Verwendung der in Fig. 1 gezeigten Vorrichtung durchgeführt werden und wird beispielhaft mit den in Fig. 1 angegebenen Bezugszeichen erläutert.

Es versteht sich jedoch, dass das erfindungsgemäße Verfahren auch mit anders ausgestalteten Vorrichtungen durchgeführt werden kann. Beispielsweise kann der Roboterarm, der zur Bewegung der Melkbecher 7 verwendet wird, sich von dem in Figur 1 dargestellten unterscheiden. Es kann zum einen ein anderer Bewegungsablauf unter Verwendung von abweichend verschwenkbaren, kippbaren oder verfahrbaren Armelementen vorgesehen sein. Zum anderen ist beispielsweise auch eine Ausgestaltung des Roboterarms denkbar, bei der nicht das gesamte Melkzeug gleichzeitig getragen wird, sondern bei der der Roboterarm einzelne Melkbecher greift und ansetzt. Auch der bildgebende Sensor 10 muss nicht zwingend am Roboterarm bzw. dem Melkzeugträger montiert sein, sondern kann extern angeordnet und auf den Euterbereich des milchgebenden Tieres ausgerichtet sein. Schließlich kann eine andere Technik als das genannte TOF-Verfahren zur Erfassung der Abstandsinformationen zusätzlich zur 2D-Abbildung verwendet werden.

Für das im Folgenden beschriebene Ansetzverfahren wird davon ausgegangen, dass ein milchgebendes Tier in einem automatisierten Melkstand eintritt bzw. in diesen eingetreten ist. Beim Eintreten oder nach dem Eintreten des Tieres in den Melkstand wird in einem ersten Schritt S1 das Tier identifiziert. Zu diesem Zweck sind verschiedene Verfahren bekannt, beispielsweise indem das Tier eine RFID (Radio Frequency IDentification)-Marke trägt, die im Melkstand oder beim Eintritt in den Melkstand von einem Empfänger erfasst wird, wobei eine Identifikationsnummer des Tieres übertragen wird.

In einem nächsten Schritt S2 werden anhand der empfangenen Identifikationsnummer des Tieres tierspezifische Daten aus einem lokalen oder zentralen Datenspeicher abgefragt. Zu den tierspezifischen Daten, nachfolgend auch Tierdaten genannt, gehören Informationen zur Positionierung des Tieres in dem Melkstand, eine Vorzugsposition, die der Roboterarm, beispielsweise der Roboterarm 1 und der Melkzeugträger 5 als tierspezifische Standardposition einnehmen und relative Positionsinformationen der Zitzen des Tieres untereinander. Die verschiedenen Informationen und ihre Bedeutung für das vorliegende Verfahren werden nachfolgend detaillierter erläutert.

In einem nächsten Schritt S3 wird das Tier anhand der empfangenen Positionsinformationen innerhalb des Melkstands positioniert. Dieses kann beispielsweise dadurch erfolgen, dass ein in dem Melkstand angeordneter Futtertrog in eine geeignete Längsposition gebracht wird. In anderen Ausgestaltungen des Melkstands kann vorgesehen sein, anstelle des Futtertrogs eine Positionierung über einen am Hinterteil des Tieres anliegenden und bezüglich seiner Position einstellbaren Bügel innerhalb des Melkstands in eine geeignete Position zu bringen. Es wird darauf hingewiesen, dass in weiteren alternativen Ausgestaltungen der Schritt S3 zur Positionierung entfallen kann, beispielsweise wenn eine Vorrichtung zum Erkennen der eingenommenen Tierposition vorhanden ist, die eine Vorpositionierung des Roboterarms in nachfolgenden Verfahrensschritten übernimmt.

In einem nächsten Schritt S4 wird der Roboterarm an die Vorzugsposition, die im Schritt S2 empfangen wurde, unter das zu melkende Tier verfahren.

In einem nächsten Schritt S5 wird über den 3D-Sensor 10 eine erste 2D-Abbildung mitsamt Abstandsinformationen des Euters des Tieres über den 3D-Sensor 10 aufgenommen. Die Abbildung wird daraufhin untersucht, ob typische Strukturen der Zitzen des Tieres sichtbar sind. Zu diesem Zweck können bekannte Bildanalyseverfahren eingesetzt werden, beispielsweise solche zur Kantenerkennung. Sollte es nicht möglich sein, überhaupt einer Zitze entsprechende Strukturen zu erkennen, kann ein Suchverfahren zwischengeschaltet werden, bei dem der Melkzeugträger 5 und/oder der Roboterarm 1 verschwenkt und/oder verkippt und/oder in ihrer Höhe variiert werden, bis eine dem Euter und den Zitzen entsprechende Struktur im Sichtfeld des bildgebenden Sensors 10 liegt.

Wenn Zitzen in der 2D-Abbildung erkannt werden können, werden die Anzahl und die jeweilige Position einer möglicherweise erkannten Zitze aus den 2D-Bildinformationen und den Abstandsinformationen, die der 3D-Sensor liefert, extrahiert. Sollte die Anzahl der als mögliche Zitzen erkannten Strukturen die Anzahl der tatsächlich vorhandenen und gegebenenfalls ebenfalls im Schritt S2 tierspezifisch abgerufenen Zahl der Zitzen übersteigen, wird eine entsprechende Anzahl von Strukturen ausgewählt, die das höchste Wahrscheinlichkeitsniveau (Signifikanzniveau), tatsächlich einer Zitze zu entsprechen, aufweisen.

In einem nächsten Schritt S6 wird ermittelt, ob eine der als nächstes anzusetzenden Zitzen im Abbild des 3D-Sensors 10 sichtbar ist. Bei der in Fig. 1 gezeigten Geometrie des Roboterarms 1 und der Anordnung des Sensors 10 werden bevorzugt zunächst die beiden hinteren Zitzen angesetzt, da andernfalls an vordere Zitzen angesetztes Melkzeug die hinteren Zitzen verdeckt. Als hintere Zitze wird eine der bei Kühen üblicherweise zwei Zitzen bezeichnet, die entfernt vom Kopf des Tieres liegen. Bezüglich ihrer Lateralposition liegen die beiden hinteren Zitzen meist weiter innen als die weiter voneinander beabstandeten vorderen Zitzen.

Wenn im Schritt S6 zumindest eine geeignete Zitze (zunächst also eine der beiden hinteren Zitzen) aufgefunden werden konnte, verzweigt das Verfahren zu einem nächsten Schritt S7, in dem der Melkbecher 7, der der aufgefundenen Zitze zugeordnet ist, durch Betätigung des entsprechenden Aktors angehoben und an die Zitze angesetzt wird. Dieses erfolgt bevorzugt unter kontinuierlicher Beobachtung durch den 3D-Sensor 10, wobei sowohl die Zitze als auch der entsprechende Melkbecher 7 in der Abbildung identifiziert werden und deren Positionen aus dem Abbild und den Abstandsinformationen ermittelt werden. Dabei kann auch eine Schrägstellung der Zitzen detektiert werden und bei einer genauen Bestimmung der Position der Spitzen der Zitzen berücksichtigt werden. Der Roboterarm 1 wird dann anhand der Relativposition von Zitze zu Melkbecher 7 angesteuert.

In einem nächsten Schritt S8 wird festgestellt, ob alle Melkbecher 7 an die Anzahl der vorhandenen Zitzen angesetzt sind. Wenn dem so ist, endet das Verfahren und der Melkprozess kann beginnen bzw. fortgesetzt werden, falls bereits nach erfolgreichem Ansetzen einer der Zitzen mit dem Melken der entsprechenden Zitze begonnen wurde. Falls noch nicht alle Melkbecher 7 angesetzt sind, verzweigt das Verfahren von dem Schritt S8 zurück zu dem Schritt S5, wobei wiederum ein Abbild der Zitzen von dem 3D-Sensor 10 aufgenommen wird und im Schritt S6 analysiert wird, ob die zweite der hinteren Zitzen sichtbar ist. Wenn dem so ist, wird im Schritt S7 der zweite hintere Melkbecher 7 angesetzt und das Verfahren wiederum wiederholt, wobei dann nacheinander die beiden den vorderen Zitzen zugeordneten Melkbecher anzusetzen sind.

Vorteilhaft ist vorgesehen, zunächst die beiden hinteren Zitzen anzusetzen und dann erst die beiden vorderen Zitzen. Ob dabei zunächst jeweils zuerst an die linke oder die rechte der hinteren bzw. später der vorderen Zitzen angesetzt wird, ist davon abhängig, welche der Zitzen besser sichtbar ist.

Wenn sich beim Ansetzen einer der beiden hinteren Zitzen herausstellt, dass die anvisierte Zitze nicht sichtbar ist, beispielsweise weil sie von einer der vorderen Zitzen verdeckt wird, verzweigt das Verfahren von dem Schritt S6 zunächst nicht zum Schritt S7, sondern zu einem Schritt S9.

In diesem Schritt S9 wird ermittelt, ob die Position zumindest einer, bevorzugt von zwei der anderen Zitzen bestimmbar ist. Wenn dies nicht der Fall ist, muss das Ansetzverfahren in einem Schritt S10 beendet und gegebenenfalls von neuem gestartet werden.

Falls zumindest eine, bevorzugt eine weitere Zitze sichtbar ist, beispielsweise beim Ansetzen einer der hinteren Zitzen die beiden vorderen Zitzen, wird in einem Schritt S11 anhand der Position der einen oder der beiden sichtbaren Zitzen unter Verwendung der gespeicherten tierspezifisch relativen Positionsinformationen die Position der nicht sichtbaren Zitze berechnet. Mit der berechneten Position wird das Ansetzverfahren im Schritt S7 fortgesetzt, wobei in dem Fall lediglich der Melkbecher 7 in seiner Position mithilfe aktueller Informationen des 3D Sensors 10 überwacht wird und der Roboterarm 1 so angesteuert wird, dass der Melkbecher 7 mit der beobachteten Position an die berechnete Position der nicht sichtbaren Zitze gefahren wird.

Das Verfahren wird dann mit dem Schritt S8 weitergeführt, von wo aus es gegebenenfalls beendet wird oder wiederum zurück zum Schritt S5 verzweigt.

Bei dem zuvor geschilderten Verfahren wird davon ausgegangen, dass relative Positionsdaten für das entsprechende Tier bereits verfügbar sind. Es kann vorgesehen sein, die Schritte S9 bis S10 so lange zu unterbinden, bis diese Voraussetzung tatsächlich erfüllt ist. Weiter ist in einem erfindungsgemäßen Verfahren vorgesehen, die relativen Positionsdaten während eines jeden Ansetzprozesses zu aktualisieren. Dazu kann beispielsweise in dem Schritt S5 eine Abfrage erfolgen, ob zu mindestens zweien, bevorzugt mehreren der Zitzen Positionsinformationen vorliegen, weil die Zitzen gleichzeitig in einem Abbild des 3D Sensors 10 identifizierbar sind und Abstandsinformationen vorliegen. Aus Positionsinformationen von mindestens zwei Zitzen kann eine Relativposition einer der Zitzen relativ zur anderen ermittelt werden. Die relativen Positionsinformationen umfassen beispielsweise in vektorieller Darstellung die gespeicherten Relativpositionen der Zitzen untereinander. Beispielsweise kann eine der Zitzen als Referenzzitze angesehen werden und die Position von den anderen Zitzen relativ zu dieser in Form jeweils eines Vektors mit drei Komponenten, jeweils einer Komponente für jede Raumrichtung x, y, z, angegeben werden. Wenn die Relativposition einer der Zitzen relativ zur Referenzzitze aktuell verfügbar ist, kann diese Information zur Aktualisierung der gespeicherten Relativpositionen verwendet werden. Dabei kann es vorteilhaft sein, die aktuelle Positionsinformation nicht vollständig zu übernehmen und damit die gespeicherte Relativposition zu überschreiben, sondern einen Mittelwert aus der gespeicherten und der aktuellen Relativposition zu bilden und als neuen Wert abzuspeichern. Es kann vorgesehen sein, den Einfluss der beiden Eingangsgrößen - der zuvor gespeicherten Relativposition und der aktuell ermittelten Relativposition - nicht gleichermaßen bei der Mittelwertbildung zu berücksichtigen. Zu diesem Zweck kann vorteilhaft ein Gewichtungsfaktor angegeben werden, der die Gewichtung einer der beiden Eingangsgrößen beschreibt.

Zur Veranschaulichung wird nachfolgend ein eindimensionales Beispiel angegeben, bei dem davon ausgegangen wird, dass zwei der Zitzen einen Abstand nur in einer Raumrichtung voneinander haben. Der in den relativen Positionsinformationen gespeicherte Abstand wird nachfolgend als $x_a$ bezeichnet. Aus der aktuellen Auswertung der Informationen des bildgebenden Sensors ergibt sich ein aktuell gemessener Abstand von $x_m$. Dann lässt sich ein gemittelter, neu abzuspeichernder Abstandswert x darstellen als:

$$x = ((1-g) \cdot x_a + g \cdot x_m) / 2,$$

wobei der Gewichtungsfaktor g aus einem Bereich von 0 bis 1 ausgewählt wird und festlegt, wie groß der Einfluss des zuvor gespeicherten Abstandswerts und des aktuell gemessenen Abstandswerts auf den neu abzuspeichernden Abstandswert ist.

Ein Wert von g=0,5 entspricht einer regulären Mittelwertsbildung. Bei einem Wert g>0,5 wird der aktuell gemessene Abstandswert stärker berücksichtigt, bei einem Wert g<0,5 wird der gespeicherte Abstandswert stärker berücksichtigt. Es hat sich gezeigt, dass ein Wert aus einem Bereich von 0,25>g>0,5 und bevorzugt von 0,3>g>0,35 besonders geeignet ist. Werte aus den genannten Bereichen stellen einen guten Kompromiss dar, bei dem zufällige Schwankungen der Messwerte nicht überbewertet werden und bei dem dennoch die gespeicherten Werte sich mit geringer Zeitverzögerung an aktuelle Messwerte anpassen.

Bei dem in Fig.2 dargestellten Verfahren wird insbesondere zur Positionierung der hinteren Melkbecher 7 auf die gespeicherten relativen Positionsinformationen zugegriffen. Das Verfahren kann jedoch auch eingesetzt werden, um die Position einer verdeckten vorderen Zitze zu bestimmen, beispielsweise anhand der zweiten vorderen Zitze und einer der hinteren Zitzen.

**Bezugszeichen**

| | |
|---|---|
| 1 | Roboterarm |
| 2 | erste Schwenkachse |
| 3 | Halter |
| 4 | zweite Schwenkachse |
| 5 | Melkzeugträger |
| 6 | Melkzeug |
| 7 | Melkbecher |
| 8 | Milch- und Vakuumschläuche |
| 9 | Segmentelement |
| 10 | Sensor |
| 11 | Lichtquelle |

S1-S11     Verfahrensschritte

**Patentansprüche**

1. Verfahren zum automatischen Ansetzen von Melkbechern (7) an Zitzen eines milchgebenden Tieres, insbesondere einer Kuh, mit den folgenden Schritten:

- Erstellen einer zweidimensionalen Abbildung von Zitzen des Tieres, wobei Abstandsinformationen für zumindest eine Mehrzahl von Bildpunkten der zweidimensionalen Abbildung vorliegen;
- Auswerten der zweidimensionalen Abbildung und der Abstandsinformationen und Ermitteln mindestens einer Position von zumindest einer der Zitzen in einem vorgegebenen Koordinatensystem;
- Bestimmen einer weiteren Position einer weiteren der Zitzen anhand der mindestens einen zuvor ermittelten Position unter Verwendung von gespeicherten relativen Positionsinformationen, die eine relative Position der Zitzen des Tiers untereinander betrifft; und
- Ansetzen eines der Melkbecher (7) an die weitere Zitze unter Verwendung der weiteren Position,

**dadurch gekennzeichnet, dass**

- die gespeicherten relativen Positionsinformationen anhand mindestens einer zuvor erstellten zweidimensionalen Abbildung und zugeordneten Abstandsinformationen von zumindest zwei Zitzen verändert werden, wobei
- zur Veränderung der gespeicherten relativen Positionsinformationen aktuell ermittelte Positionsinformationen und die gespeicherten relativen Positionsinformationen miteinander verrechnet werden.

2. Verfahren nach Anspruch 1, bei dem die Position mindestens einer, bevorzugt beider bezüglich eines bildgebenden Sensors vorderen Zitzen aus der zweidimensionalen Abbildung und den Abstandsinformationen ermittelt wird und die Position einer der beiden hinteren Zitzen anhand der relativen Abstandsinformationen bestimmt wird.

3. Verfahren nach Anspruch 1 oder 2, bei dem das Verrechnen der aktuell ermittelten Positionsinformationen und der gespeicherten relativen Positionsinformationen eine Mittelwertbildung umfasst.

4. Verfahren nach Anspruch 3, bei dem ein gewichteter Mittelwert mit einem Gewichtungsfaktor g für die aktuell ermittelten Positionsinformationen umfasst.

5. Verfahren nach einem der Ansprüche 1 bis 4, bei dem die 2D-Abbildung mithilfe eines Time-Of-Flight-Sensors erstellt wird, der eine Mehrzahl von Bildpunkten aufweist, wobei für jeden der Bildpunkte Abstandsinformationen in einem Phasendetektionsverfahren ermittelt werden.

6. Verfahren nach einem der Ansprüche 1 bis 5, bei dem in der 2D-Abbildung auch mindestens ein anzusetzender Melkbecher (7) erfasst wird und eine Position des Melkbechers (7) ermittelt wird.

7. Verfahren nach Anspruch 6, bei dem der Melkbecher (7) unter Berücksichtigung einer ermittelten Position der Zitze im vorgegebenen Koordinatensystem sowie der ermittelten Position des Melkbechers (7) in dem gleichen Koordinatensystem angesetzt wird.

8. Verfahren nach einem der Ansprüche 1 bis 7, bei dem die relativen Positionsinformationen für mindestens eine der Zitzen in Form eines Vektors gespeichert werden, wobei der Vektor eine relative Position der Zitze zu einem vorgegebenen Bezugspunkt angibt.

9. Verfahren nach Anspruch 8, bei dem der vorgegebene Bezugspunkt gleich der Position einer der Zitzen gewählt wird.

10. Vorrichtung zum automatischen Ansetzen von Melkbechern (7) an Zitzen eines milchgebenden Tieres, insbesondere einer Kuh, aufweisend eine Ansetzvorrichtung und einen Sensor (10) zur Erfassung einer zweidimensionalen Abbildung der Zitzen des Tieres und von Abstandsinformationen für zumindest eine Mehrzahl von Bildpunkten der zweidimensionalen Abbildung, **dadurch gekennzeichnet, dass** sie eine zur Durchführung eines Verfahrens gemäß einem der zuvor genannten Ansprüche eingerichtete Ablaufsteuerung aufweist, die Informationen von dem Sensor (10) auswertet und die Ansetzvorrichtung ansteuert.

**Claims**

1. A method for automatically placing teat cups (7) onto teats of a milk-producing animal, in particular a cow, having the following steps:

   - creating a two-dimensional image of teats of the animal, wherein distance information for at least a plurality of image points of the two-dimensional image is available;
   - evaluating the two-dimensional image and the distance information and ascertaining at least one position of at least one of the teats in a specified coordinate system;
   - determining a further position of a further one of the teats on the basis of the at least one previously ascertained position using stored relative position information that relates to relative positions of the teats of the animal with respect to one another; and
   - placing one of the teat cups (7) onto the further teat using the further position,
   **characterized in that**
   - the stored relative position information is changed on the basis of at least one previously created two-dimensional image and associated distance information of at least two teats, wherein
   - currently ascertained position information and the stored relative position information are offset against one another to change the stored relative position information.

2. The method as claimed in claim 1, wherein the position of at least one, preferably both, teats located at the front with respect to an imaging sensor is ascertained from the two-dimensional image and the distance information, and the position of one of the two rear teats is determined on the basis of the relative distance information.

3. The method as claimed in claim 1 or 2, wherein the offsetting of the currently ascertained position information and the stored relative position information comprises forming an average value.

4. The method as claimed in claim 3, wherein a weighted average value having a weighting factor g for the currently ascertained position information comprises.

5. The method as claimed in one of claims 1 to 4, wherein the 2D image is created using a time-of-flight sensor having a plurality of image points, wherein distance information is ascertained in a phase detection method for each of the image points.

6. The method as claimed in one of claims 1 to 5, wherein at least one teat cup (7) to be placed is also captured in the 2D image and a position of the teat cup (7) is ascertained.

7. The method as claimed in claim 6, wherein the teat cup (7) is placed taking into consideration an ascertained position of the teat in the specified coordinate system and the ascertained position of the teat cup (7) in the same coordinate system.

8. The method as claimed in one of claims 1 to 7, wherein the relative position information for at least one of the teats is stored in the form of a vector, wherein the vector indicates a relative position of the teat with respect to a specified reference point.

9. The method as claimed in claim 8, wherein the specified reference point is selected to be equal to the position of one of the teats.

10. A device for automatically placing teat cups (7) onto teats of a milk-producing animal, in particular a cow, having a placement device and a sensor (10) for capturing a two-dimensional image of the teats of the animal and distance information for at least a plurality of image points of the two-dimensional image, **characterized in that** it has a sequence control, set up to perform a method as claimed in one of the previously mentioned claims, that evaluates information from the sensor (10) and actuates the placement device.

## Revendications

1. Procédé pour installer automatiquement des gobelets trayeurs (7) sur les trayons d'un animal laitier, en particulier, d'une vache, comprenant les étapes suivantes :

   - création d'une représentation à deux dimensions de trayons de l'animal, avec des informations de distance pour au moins une multitude de points d'image de la représentation à deux dimensions ;
   - analyse de la représentation à deux dimensions et des informations de distance et détermination d'une position d'au moins un des trayons dans un système de coordonnées prédéterminé ;
   - détermination d'une autre position d'un autre des trayons à l'aide de l'au moins une position déterminée précédemment à l'aide d'informations de position relatives mémorisées qui concernent une position relative des trayons de l'animal les uns par rapport aux autres ; et
   - installation de l'un des gobelets trayeurs (7) sur l'autre trayon en utilisant l'autre position, **caractérisé en ce que**
   - les informations de position relatives mémorisées sont modifiées à l'aide d'au moins une représentation à deux dimensions réalisée auparavant et d'informations de distance associées d'au moins deux trayons,
   - des informations de position instantanées et les informations de position relatives mémorisées étant calculées ensemble pour modifier les informations de position relatives mémorisées.

2. Procédé selon la revendication 1, dans lequel la position d'au moins, de préférence des deux trayons situés devant par rapport à un capteur d'imagerie est déterminée à partir de la représentation à deux dimensions et des informations de distance et la position de l'un des deux trayons situés derrière est déterminée à l'aide des informations de distance relatives.

3. Procédé selon la revendication 1 ou 2, dans lequel le calcul des informations de position instantanées et des informations de position relatives mémorisées comprend un calcul de moyenne.

4. Procédé selon la revendication 3, dans lequel une moyenne pondérée comprend un facteur de pondération g pour les informations de position instantanées.

5. Procédé selon l'une des revendications 1 à 4, dans lequel la représentation 2D est réalisée à l'aide d'un capteur à temps de vol qui comprend une multitude de points d'image, des informations de distance étant déterminées pour chacun des points d'image dans un procédé de détection de phase.

6. Procédé selon l'une des revendications 1 à 5, dans lequel la représentation 2D inclut aussi au moins un gobelet trayeur (7) à installer et une position du gobelet trayeur (7) est déterminée.

7. Procédé selon la revendication 6, dans lequel le gobelet trayeur (7) est installé en tenant compte de la position déterminée du trayon dans le système de coordonnées prédéterminé ainsi que de la position déterminée du gobelet trayeurs (7) dans le même système de coordonnées.

8. Procédé selon l'une des revendications 1 à 7, dans lequel les informations de position relatives pour au moins un des trayons sont enregistrées sous la forme d'un vecteur, le vecteur indiquant une position relative du rayon par rapport à un point de référence prédéterminé.

9. Procédé selon la revendication 8, dans lequel le point de référence prédéterminé est choisi identique à la position de l'un des trayons.

10. Dispositif pour l'installation automatique de gobelets trayeurs (7) sur des trayons d'un animal laitier, en particulier d'une vache, présentant un dispositif d'installation et un capteur (10) destiné à capter une représentation bidimensionnelle des trayons de l'animal et d'informations de distance pour au moins une multitude de points d'image de la représentation bidimensionnelle, **caractérisé en ce qu'**il comprend une commande de processus configurée pour l'exécution d'un procédé selon l'une des revendications précédentes, qui analyse les informations du capteur (10) et commande le dispositif d'installation.

Fig. 1

EP 3 328 188 B1

Fig. 2

**S1** Tier identifizieren

**S2** tierspezifische Informationen abrufen

**S3** Tier positionieren

**S4** Roboterarm an Vorzugs-position verfahren

**S5** 2D-Abbildung mit Abstands-information aufnehmen und analysieren

**S6** Position anvisier-ter Zitze erkannt?
ja / nein

**S9** Position anderer Zitze erkannt?
ja / nein

**S11** Position der anvisierten Zitze anhand rel. Positionsinformation bestimmen

**S10** Ansetzen abbrechen

**S7** Melkbecher an anvisierte Zitze ansetzen

**S8** alle Zitzen angesetzt?
nein / ja

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007104124 A1
- WO 2012134379 A1
- WO 2009093965 A1